# EUROPEAN PATENT APPLICATION

(11) **EP 4 198 905 A1**
(43) Date of publication of application: **21.06.2023**
(21) Application number: 22161000.9
(22) Date of filing: 09.03.2022
(51) Int. Cl.: G06T 11/00, G06T 5/00

(54) **DENOISING MEDICAL IMAGE DATA PRODUCED BY A COMPUTED TOMOGRAPHY SCANNER**

(30) Priority: 20.12.2021 US 202163291499 P
(71) Applicant: Koninklijke Philips N.V., 5656 AG Eindhoven (NL)
(72) Inventor: BERGNER, Frank, Eindhoven (NL); WUELKER, Christian, Eindhoven (NL); BRENDEL, Bernhard Johannes, Eindhoven (NL); SCHNELLBÄCHER, Nikolas David, Eindhoven (NL); GRAß, Michael, Eindhoven (NL); BROWN, Kevin Martin, Eindhoven (NL); WESTMORE, Michael Stephen, Eindhoven (NL)
(74) Representative: Philips Intellectual Property & Standards

(57) **Abstract**

A mechanism for generating denoised basis images for a computed tomography scanner. An input dataset, comprising first and second basis image data, is processed using a machine-learning algorithm process to produce the denoised basis images. The first and second basis image data each comprise at least one basis image, wherein the type of image differs between the first and second basis image data.

## Description

### TECHNICAL FIELD

The present disclosure relates to the field of medical imaging and, in particular, to the field of denoising medical imaging data produced by a computed tomography scanner.

### BACKGROUND INFORMATION

Computed tomography (CT) scanners are well-established medical imaging devices that use a detector to detect an interaction between X-ray radiated energy and irradiated material in order to generate medical imaging data.

In the field of computed tomography imaging, the use of non-traditional imaging techniques, such as spectral computed tomography, is becoming increasingly common. CT scanners that employ spectral computed tomography techniques are able to generate images that represent a particular type and/or frequency of particles incident at the detector of the CT scanner, e.g. depending upon the modality of the CT scanner. These images are often called spectral (basis) images or material (basis) images, collectively called basis images.

More specifically, spectral CT is a CT technique that is based upon the discrimination between two or more different (X-ray) photon energies or spectra. This allows for material separation based on different attenuation profiles of the materials at different energy values. In this way, a CT scanner is able to produce different types of basis images representing different energy levels or effects. Examples of basis image types include photoelectric effect images and Compton-scattering images. Other examples include iodine imaging data, which indicates the presence of iodine; water imaging data, which indicates the presence of water; contrast agent imaging data, which indicates the presence of a contrast agent, and so on.

For instance, a CT scanner is able to generate photoelectric effect imaging data, which is imaging data generated responsive only to particles that arrive at a detector as a result of a photoelectric effect interaction. As another example, a spectral CT scanner is able to generate Compton-scattering imaging data, which is imaging data generated responsive only to particles that arrive at a detector as a result of a Compton-scattering effect interaction.

Of course, a CT scanner is also able to generate combined imaging data, which is produced from projection data obtained from all detectors of the CT scanner (i.e. resulting from any particle arriving at any detector). Combined imaging data may alternatively be labelled single energy (SECT) imaging data.

One ongoing problem with imaging data produced by a CT scanner is that there is often a significant amount of noise in the imaging data. This is due to the underlying physics of spectral imaging, as well as the low level of understanding of material decompositions as a result of radiation.

For this reason, there is currently an elaborate combination of different denoising approaches and/or methods employed to denoise imaging data. Some denoising algorithms operate in the projection domain, while others operate in the image domain. For spectral CT imaging, in which at least two spectral images of different types are generated, this problem is particular challenging due to the anti-correlated nature of the noise in the different types of spectral images.

There is an ongoing desire to improve the denoising of medical imaging data and, in particular, to improve the denoising of CT medical imaging data produced when operating in a spectral imaging modality.

### SUMMARY

The invention is defined by the claims.

According to examples in accordance with an aspect of the invention, there is provided a computer-implemented method for denoising basis images of a region of interest of a subject scanned by a computed tomography (CT) scanner, wherein the CT scanner comprises a detection system responsive to radiated energy.

The computer-implemented method comprises: obtaining an input dataset comprising: first basis image data of a region of interest of the subject, comprising image domain data responsive to a first type of material in the region of interest and/or spectra of energy passing through or generated in the region of interest; and second basis image data of the region of interest of the subject, comprising image domain data responsive to a second type of material in the region of interest and/or spectra of energy passing through or generated in the region of interest, wherein the first and second basis image data are generated by a computed tomography scanner; and processing the input dataset using a machine-learning algorithm to generate a first denoised basis image, being a denoised image responsive to the first type of material and/or spectra of energy, and a second denoised basis image, being a denoised image responsive to the second type of material and/or spectra of energy.

Embodiments provide a new approach for generating denoised material/spectral basis images. In particular, a machine-learning algorithm processes an input dataset to generate a plurality of denoised basis images of different types. The input dataset comprise basis image data of different types, e.g. directed or responsive towards a particular material or spectra of energy.

It is also herein recognized that improved denoising of basis image data means that lower doses of radiation can be used in generating the original basis images, which are then denoised. This is because increased dosage of radiation is one mechanism to reduce noise in image data, such that improved denoising algorithms or methodologies mean that lower dosages could be used whilst achieving the same effect (i.e. a same noise level after noise reduction) as a higher dosage, using pre-existing noise reduction functions. Lower dosages are preferred from a medical point of view to reduce risk of exposure of the subject or operator to potentially harmful radiation.

In some examples, the input dataset further comprises combined image data of the region of interest of the subject, wherein the combined image data is generated, by the computed tomography scanner, using projection data obtained from all detection elements of the computed tomography scanner. Such a combined image is functionally equivalent or analogous to one obtained from a non-spectral SECT scanner.

The machine-learning algorithm may be an artificial neural network formed of a plurality of layers. It has been identified that an artificial neural network is particularly efficient and accurate in identifying noise in basis images, and that an artificial neural network can be readily adapted for a larger input dataset, e.g. by increasing the number of input channels to the artificial neural network.

The step of processing the input dataset using the machine-learning algorithm may comprise setting values of the first layer of the artificial neural network to include all values of the first basis image data and all values of the second basis image data.

In some examples, the first basis image data comprises a single first basis image; and the second basis image data comprises a single second basis image. Each of the first and second basis images may be two-dimensional.

In some examples, the first basis image data comprises a plurality of first basis images, each first basis image being two-dimensional; and the second basis image data comprises a plurality of second basis images, each second basis image being two-dimensional.

In some embodiments, the plurality of first basis images comprises fewer than 10 first basis images; and the plurality of second basis images comprises fewer than 10 second basis images.

Optionally, the first basis image data only comprises at least one photoelectric image and the second basis image data only comprises at least one Compton-scatter image.

The machine-learning algorithm may be a residual machine-learning algorithm that produces noise imaging data.

Optionally, the first basis image data and the second basis image data are both generated by a computed tomography scanner operating in a low dosage mode.

In some examples, the input dataset comprises one or more sets of additional basis image data of the region of interest of the subject, each set of additional basis image data comprising image domain data responsive to a respective different type of material in the region of interest and/or spectra of energy passing through or generated in the region of interest; and processing the input dataset using a machine-learning algorithm further generates, for each set of additional basis image data, a respective additional denoised basis image, being a denoised image responsive to the respective type of material and/or spectra of energy of the corresponding set of additional basis image data.

In some examples, each set of additional basis image data comprises a single additional basis image. Each single additional basis image may be two-dimensional.

In other examples, each set of additional basis image data comprises a plurality of additional basis images, each additional basis image being two-dimensional. The plurality of additional basis images may comprise fewer than 10 additional basis images.

There is also proposed a computer program product comprising computer program code means which, when executed on a computing device having a processing system, cause the processing system to perform all of the steps of any herein described method. The computer-program product is non-transitory.

There is also proposed a device configured to denoise medical imaging data the device comprising: processing circuitry; and a memory containing instructions that, when executed by the processing circuitry, configure the processing circuitry to: obtain an input dataset comprising: first basis image data of a region of interest of the subject, comprising image domain data responsive to a first type of material in the region of interest and/or spectra of energy passing through or generated in the region of interest; and second basis image data of the region of interest of the subject, comprising image domain data responsive to a second type of material in the region of interest and/or spectra of energy passing through or generated in the region of interest, wherein the first and second basis image data are generated by a computed tomography scanner; and process the input dataset using a machine-learning algorithm to generate a first denoised basis image, being a denoised image responsive to the first type of material and/or spectra of energy, and a second denoised basis image, being a denoised image responsive to the second type of material and/or spectra of energy.

In some examples, the input dataset further comprises combined image data of the region of interest of the subject, wherein the combined image data is generated, by the computed tomography scanner, using projection data obtained from all detection elements of the computed tomography scanner.

In some examples, the machine-learning algorithm is an artificial neural network formed of a plurality of layers.

In at least one embodiment, the first basis image data only comprises at least one photoelectric image and the second basis image data only comprises at least one Compton-scatter image.

### BRIEF DESCRIPTION OF THE DRAWINGS

For a better understanding of the invention, and to show more clearly how it may be carried into effect, reference will now be made, by way of example only, to the accompanying drawings, in which:
Figure 1 illustrates an imaging system in which embodiments may be implemented;
Figure 2 illustrates an approach according to an embodiment;
Figure 3 provides images demonstrating a denoising capability of herein proposed approaches;
Figure 4 provides further images demonstrating a denoising capability of herein proposed approaches;
Figure 5 is a flowchart illustrating a method according to an embodiment; and
Figure 6 illustrates a device according to an embodiment.

### DETAILED DESCRIPTION

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The disclosure provides a mechanism for generating denoised basis images for a computed tomography scanner. An input dataset, comprising first and second basis image data, is processed using a machine-learning algorithm process to produce the denoised basis images. The first and second basis image data each comprise at least one basis image, wherein the type of image differs between the first and second basis image data.

Concepts disclosed herein are based on the realization that a more accurate denoising can be performed by two or more types/forms of basis image data as an input to a machine-learning method that generates denoised basis images of each type. In particular, structural features can be preserved and anti-correlated noise accounted for by using the machine-learning method with multiple input channels, for multiple basis image data.

Embodiments can be employed to improve the denoising of basis images produced by a CT scanner. Embodiments find particular use in spectral CT systems that produce multiple basis images, such as dual-layer CT systems or kVp-switching CT systems.

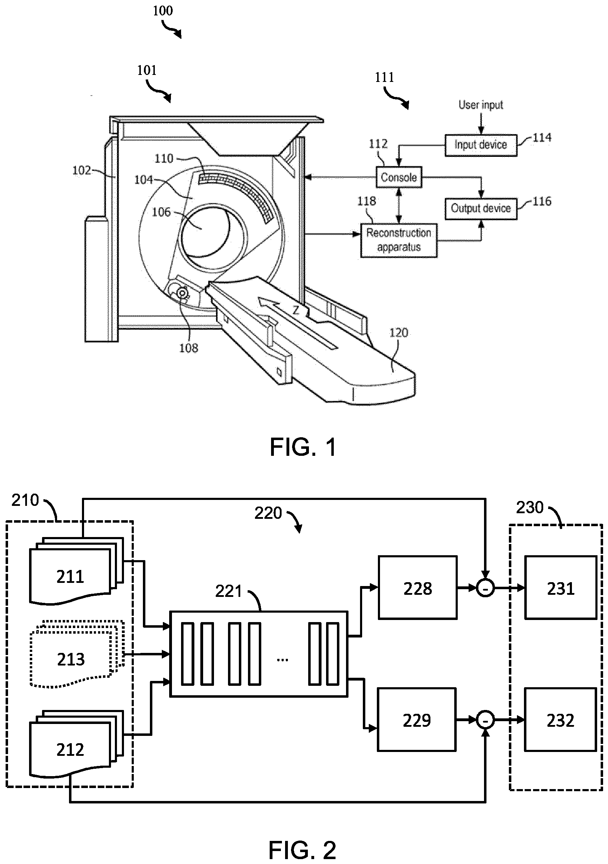

Figure 1 illustrates an imaging system 100, and in particular a computed tomography (CT) imaging system, in which embodiments of the present invention can be employed. The CT imaging system comprises a CT scanner 101 and processing interface 111, which processes and performs actions using data generated by the CT scanner.

The CT scanner 101 includes a generally stationary gantry 102 and a rotating gantry 104. The rotating gantry 104 is rotatably supported by the stationary gantry 102 and rotates around an examination region about a longitudinal or z-axis.

A patient support 120, such as a couch, supports an object or subject such as a human patient in the examination region. The support 120 is configured to move the object or subject for loading, scanning, and/or unloading the object or subject.

A radiation source 108, such as an x-ray tube, is rotatably supported by the rotating gantry 104. The radiation source 108 rotates with the rotating gantry 104 and emits radiation that traverses the examination region 106.

A radiation sensitive detector array 110 subtends an angular arc opposite the radiation source 108 across the examination region 106. The detector array 110 includes two or more rows of detectors that extend along the z-axis direction, detects radiation traversing the examination region 106, and generates projection data indicative thereof. The projection data may, for instance, be cone-beam projection data.

In some examples, the detector array 110 comprises having a first layer of detectors to collect low-energy projection data and a second layer of detectors to collect high-energy projection data, the first and second layers being stacked. The low-energy projection data and the high-energy projection data is collected at a same time. Projection data is data in the projection domain.

Other approaches and detector arrays for gathering low-energy projection data and high-energy projection data will be apparent to the skilled person, and may include any form of detector array capable of generating projection data for different energy spectra, i.e. as used in any suitable spectral CT scanner.

The processing interface 111 processes the projection data generated the CT scanner. The processing interface 111 may also facilitate user control over the operation of the CT scanner.

In particular, the processing interface may comprise a general-purpose computing system or computer that serves as an operator console 112 and includes an input device(s) 114 such as a mouse, a keyboard, and/or the like and an output device(s) 116 such as a display monitor, a filmer or the like. The console 112 allows an operator to control operation of the system 100. Data generated by the processing interface can be displayed through at least one display monitor of the output device(s) 116.

The processing interface makes use of reconstruction apparatus 118 to process the projection data and reconstruct image data, e.g. for display at the output device 116 or for storage at an external server or database. It is to be appreciated that the reconstruction apparatus 118 can be implemented through a microprocessor(s), which executes a computer readable instruction(s) encoded or embedded on computer readable storage medium such as physical memory and other non-transitory medium. Additionally or alternatively, the microprocessor(s) can execute a computer readable instruction(s) carried by a carrier wave, a signal and other transitory or non-transitory medium.

The reconstruction apparatus 118 may employ a filtered-backprojection (FBP) reconstruction, an image domain and/or projection domain reduced noise reconstruction algorithm (e.g., an iterative reconstruction) and/or other algorithm.

In particular examples, in which the projection data comprises low-energy projection domain data and high-energy projection domain data, the reconstruction apparatus 118 may first use projection-space decomposition to produce basis projection data.

Basis projection data is projection data that is responsive to a particular material in an imaged region of interest type or energy spectra/level of particles passing through the scanned/imaged region of interest during the CT scanning process. Different types of basis projection data are responsive to different types of material or energy spectra. Examples of different energy spectra include energy spectra associated with particles produced via a photoelectric effect or via Compton-scattering. This is because particles generated as a result of different effects are of different energies, i.e. fall into different energy spectra. Examples of different materials include water, iodine, contrast agent and so on. These can be identified as different materials have different absorption characteristics.

Appropriate basis functions for generating such basis projection domain data will be readily apparent to the skilled person. The basis projection domain data can then undergo reconstruction (e.g. spectral reconstruction) to generate basis image data.

As with the basis projection data, different types of basis image data provide image data representative of different types of material and/or energy spectra in a scanned/imaged region of interest during the CT scanning process. By way of example, different types of basis image data include: photoelectric basis image data; Compton-scattering basis image data; iodine imaging data; water imaging data; contrast agent imaging data and so on.

The basis image data can be subsequently processed to produce a number of image relevant for diagnosis, such as Mono-energetic (MonoE) images, iodine maps, Z-effective images, and virtual non-contrast images. This could be performed by the reconstruction apparatus or another processing system.

Of course, the reconstruction apparatus may also be used to generate single energy (SECT) images in form of combined image data. Combined image data is generated from combined projection data, which is produced by combining the high and low-energy projection domain data together (e.g. summing or averaging the high and low-energy projection domain data).

The present invention relates to the processing of basis image data and, in particular, to the denoising of basis image data. Basis image data may include any material or spectral basis image data in the image domain (i.e. after reconstructions).

Figure 2 conceptually illustrates an approach according to an embodiment of the invention.

The approach proposes to process an input dataset 210, comprising first basis image data 211 and second basis image data 212, using a machine-learning algorithm 220 process. The machine-learning algorithm process produces, as output 230, a first denoised basis image 231 and a second denoised basis image 232.

The first basis image data 211 contains image domain data, e.g. produced by the reconstruction apparatus, responsive to a first type of material in the imaged region of interest and/or a first spectra of energy of particles passing through the imaged region of interest. The first basis image data 211 comprises at least one first basis image, e.g. a collection of first basis images. A first basis image is a basis image of a first type.

The second basis image data 212 contains image domain data, e.g. produced by the reconstruction apparatus, responsive to a second, different type of material in the imaged region of interest and/or a first spectra of energy of particles passing through the imaged region of interest. The second basis image data 211 comprises at least one second basis image, e.g. a collection of second basis images. A second basis image is a basis image of a second type, different to the first type.

By way of example, the first and second basis image data may contain photoelectric basis image data, Compton-scattering basis image data, iodine imaging data, water imaging data, contrast agent imaging data and so on.

A basis image may be a two-dimensional slice or image produced by the computed-tomography scanner. This provides improved flexibility for combining the basis images with neighboring basis images.

A denoised basis image provides a single image, being a denoised version of one of the images in the associated basis image data. Thus, a first denoised basis image 231 is a denoised version of one of the basis images in the first basis image data 211. Similarly, a second denoised basis image 232 is a denoised version of one of the basis images in the second basis image data 212.

The first basis image data and the second basis image data may each comprise at least one basis image, e.g. a single basis image or a plurality of basis image. Embodiments that use more basis images in the basis image data, provided as input, have been identified as providing superior denoising capability compared to those with fewer basis images. This is because the additional basis images provide more information for identifying true features or structures in the region of interest.

In preferred examples, where the basis image data(s) contain a plurality of basis images, the basis image data may include a primary basis image that corresponds, in space, to the denoised basis image produced by the machine-learning algorithm process. The basis image data may further include neighboring basis images to this primary basis image.

A neighboring basis image is one produced by the CT scanner at a neighboring imaging angle to the primary basis image. An imaging angle is an angle that the radiation source makes with respect to the subject being image. Different instances of projection data are generated at different imaging angles, as the radiation source rotates about the subject.

In some examples, when the basis image data contains a plurality of basis images, the total number of basis images in each basis image data may not exceed 10. It has been recognized that whilst using a plurality of basis images in each basis image data provides superior denoising capability, this denoising capability deteriorates if too many basis images are provided as input, as this provides too much data to process efficiently.

In the illustrated example, the machine-learning algorithm process 220 comprises a residual machine-learning algorithm 221. The residual machine-learning algorithm produces a first noise image 228 representing a predicted level of noise in a particular basis image of the first basis image data 211 and a second noise image 229 representing a predicted level of noise in a particular basis image of the second basis image data 212.

The first denoised basis image 231 can be produced by subtracting the first noise image 228 from the corresponding basis image in the first basis image data 211. Similarly, the second denoised basis image 232 can be produced by subtracting the second noise image 228 from the corresponding basis image in the second basis image data 212.

The noise image(s) may be weighted to control the amount of noise present in the denoised basis images. The weighting may, for example, be responsive to a user input.

The skilled person would appreciate that other forms of machine-learning algorithms could be used to advantage. For instance, the residual machine-learning algorithm could be replaced by a machine-learning algorithm that directly predicts the denoised first and second basis images.

The machine-learning algorithm process 220 is particularly advantageous in that the input dataset, which is input to the machine-learning algorithm, contains at least two types of basis image data. This means that each type of basis image data contribute to the denoising of the other type of basis image data. In this way, rather than performing a simple denoising of each type of basis image data in turn, the denoising is performed at a same time. This means that missing features or elements, e.g. due to noise, in one type of basis image data can be compensated or identified due to the presence, e.g. of the feature or of the same noise, in another type of basis image data.

Moreover, using multiple types of basis image data may facilitate the machine-learning algorithm learning how to identify and/or remove correlated low frequency noise

The proposed approach provides a more accurate mechanism for denoising the basis image data and producing denoised basis images.

The machine-learning algorithm may include any machine-learning algorithm, such an artificial neural network, e.g. a convolutional neural network. If a convolutional neural network is used, various network topologies could be employed such as deep feed-forward nets or also bias-free deep denoising CNNs.

Processing the input dataset using the machine-learning algorithm may comprise setting values of the first layer of the artificial neural network to include all values of the first basis image data and all values of the second basis image data. Use of an artificial neural network

Optionally, the input dataset may further comprise combined image data 213 of the region of interest of the subject. Combined image data 213, or single energy image data, is imaged data produced using projection data generated from all detectors of the CT system - e.g. rather than a subset (i.e. not all). For ease of understanding, combined image data may be considered as being analogous to conventional image data produced by a CT scanner having only a single type and/or layer of detector(s).

Use of the combined image in the input dataset means that structure information contained in the combined image can be advantageously used in the denoising of the basis images.

Moreover, the resulting machine-learning algorithm can better handle anti-correlated edges/structures in the basis image data. Because of their anti-correlation, such structures may not be sufficiently visible in the image data to be utilized by conventional denoising techniques. The machine-method algorithm in the proposed framework, on the other hand, will by design be able to extract structure information from all input images and analyze this information in an intelligent way to deliver improved edge-preserving production of denoised basis images.

The illustrated example includes only two sets of basis image data for producing a respective two denoised basis images. However, embodiments could be expanded such that the input dataset comprises more than two sets of basis image data, which is processed using the machine-learning algorithm, to produce a respective number of denoised basis images.

Thus, the input dataset may comprises one or more sets of additional basis image data of the region of interest of the subject, each set of additional basis image data comprising image domain data responsive to a respective different type of material in the region of interest and/or spectra of energy passing through or generated in the region of interest. The types of each set of additional basis image data differ from one another and from the first and second basis image data.

Processing such an input dataset, using an appropriate configured machine-learning algorithm will produce, in addition to the first and second denoised basis images, a respective additional denoised basis image for each set of additional basis image data. Each additional denoised basis image is a denoised image that is responsive to the respective type of material and/or spectra of energy of the corresponding set of additional basis image data.

In such examples, each set of additional basis image data may contains at least one basis image. Each denoised basis image is a denoised version of one of these basis images.

As the herein disclosed mechanism provides good denoising capability, it is possible to reduce the dosage level of the CT scanner during the imaging phase whilst still achieving high-quality output images. Thus, in some examples, the first and second basis image data may be image data obtained using a low-dosage CT scanning procedure. A low-dosage CT scanning procedure is one that generates less radiation than a conventional scanning procedure, such as those commonly used in hospitals for imaging needs.

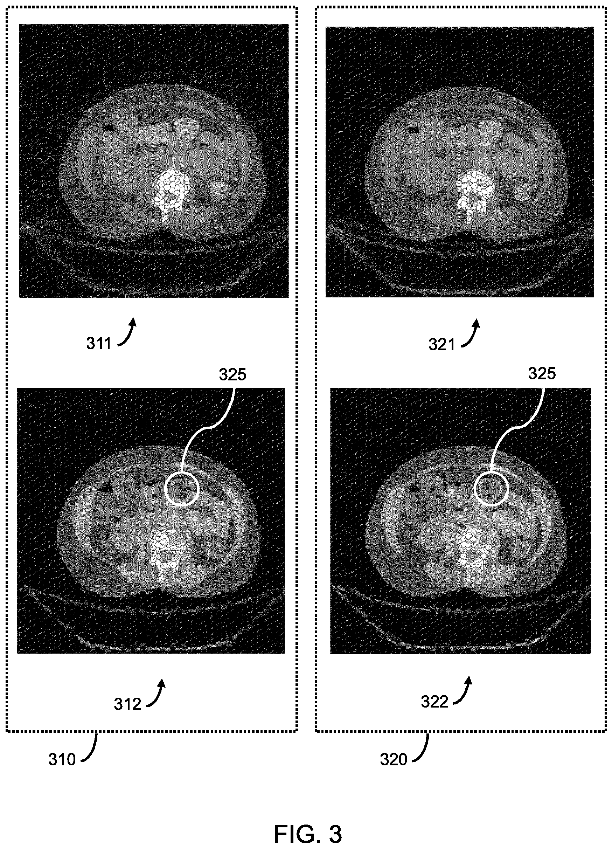

Figure 3 illustrates the improved denoising capability of embodiments of the invention. Figure 3 illustrates four denoised images. Parts of each denoised image have been partially obscured for privacy reasons.

A first set 310 of denoised images was produced using a conventional or prior art denoising mechanism, namely a structure propagation and correlated noise suppression SP-CNS approach.

A second set 320 of denoised images was produced using the herein proposed approach for denoising. For this example, the input dataset for the machine-learning algorithm process comprises first basis image data, formed of 7 first basis images - being basis images of a first type, and second basis image data, formed of 7 second basis images - being basis images of a second type. In this way, the input dataset comprises a total of 14 basis images, e.g. slices, which was fed to the machine-learning algorithm as input.

Each set contains a denoised basis image of a first type and a denoised basis image of a second type. As previously explained, different types are responsive to different materials in an imaged region of interest type or energy level of particles passing through the imaged region of interest during the CT scanning process. In the illustrated example, a basis image of the first type is a photoelectric image and a basis image of the second type is a Compton-scatter image.

Thus, the first set 310 comprises a first denoised photoelectric image 311 and a first denoised Compton-scatter image 312. Similarly, the second set 320 comprises a second denoised photoelectric image 321 and a second denoised Compton-scatter image 322. For the first denoising, for the first set 310, a non-AI-based denoising method was used, while for the second denoising, for the second set 320, the proposed AI-based approach was applied.

It can clearly be seen how the proposed denoising approach provides improved denoising capability for both types of basis image. In particular, imaging artifacts are significantly reduced, which is best demonstrated in the comparison between the first and second photoelectric images. Moreover, more structures and features are preserved more clearly in the denoising process, which is best demonstrated in the comparison between the first and second Compton-scatter images, e.g. in a first region 325 of each image.

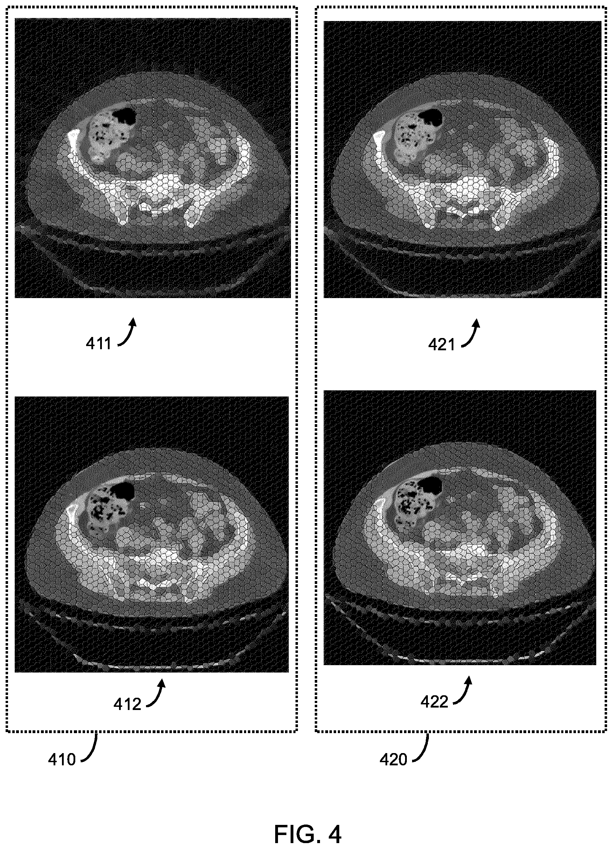

Figure 4 provides another example illustrating the improved denoising capability of embodiments of the invention. Figure 4 illustrates another four denoised images. As before, parts of each denoised image have been partially obscured for privacy reasons.

Once again, a first set 410 of denoised images was produced using a conventional or prior art denoising mechanism, which uses non-AI techniques. A second set 420 of denoised images was produced using the herein proposed approach for denoising.

The first set 410 comprises a first denoised photoelectric image 411 and a first denoised Compton-scatter image 412. Similarly, the second set 420 comprises a second denoised photoelectric image 421 and a second denoised Compton-scatter image 422.

Figure 4 again illustrates the improved denoising capability provided by adopting approaches according to embodiments described in this disclosure.

Embodiments of the invention makes use of a machine-learning algorithm to process the input dataset and produce denoised versions of first and second basis images.

A machine-learning algorithm is any self-training algorithm that processes input data in order to produce or predict output data. Here, the input data comprises the input dataset and the output data comprises denoised versions of first and second basis images or residual noise images for the first and second basis images.

Suitable machine-learning algorithms being employed in the present invention will be apparent to the skilled person. One especially suitable example of a machine-learning algorithm is an artificial neural network.

The structure of an artificial neural network (or, simply, artificial neural network) is inspired by the human brain. Artificial neural networks are comprised of layers, each layer comprising a plurality of neurons. Each neuron comprises a mathematical operation. In particular, each neuron may comprise a different weighted combination of a single type of transformation, e.g. the same type of transformation, sigmoid etc. but with different weightings. In the process of processing input data, the mathematical operation of each neuron is performed on the input data to produce a numerical output, and the outputs of each layer in the artificial neural network are fed into the next layer sequentially. The final layer provides the output.

Methods of training a machine-learning algorithm are well known. Typically, such methods comprise obtaining a training dataset, comprising training input data entries and corresponding training output data entries. An initialized machine-learning algorithm is applied to each input data entry to generate predicted output data entries. An error, which is produced by a loss or cost function, between the predicted output data entries and corresponding training output data entries is used to modify the machine-learning algorithm. This process can be repeated until the error converges, and the predicted output data entries are sufficiently similar, e.g. ±1%, to the training output data entries. This is commonly known as a supervised learning technique.

For example, where the machine-learning algorithm is formed from an artificial neural network, (weightings of) the mathematical operation of each neuron may be modified until the error converges. Known methods of modifying an artificial neural network include gradient descent, backpropagation algorithms and so on.

For the present mechanism, it is possible to employ the same loss function used in standard CNN-based denoising mechanisms. However, by making sensible modifications/additions to the loss function it is possible to include prior knowledge on the anti-correlation of the output channels, i.e. of the denoised first and second basis images. Such modifications/additions may also be used to prevent biases that may result from assuming a simplistic multivariate Gaussian model, as is assumed in the classical techniques. One example for such a modification can be additional terms that penalize the presence of bias when using the same denoised image but a multitude of different additive noise realizations for training. In another example, a generative-adversarial network (GAN) approach can used for the loss function. Such an approach would force the network to generate noise predictions that cannot be distinguish from other instances of real noise by the discrimination unit of the GAN.

Use of an artificial neural network to process an input dataset comprising two different types of basis image data, and optionally combined image data, has the possibility of learning structure propagation in the generation of the denoised basis images. Moreover, the training of the artificial neural network ensures that the most effective denoising strategy is learned.

In this way, it is possible to combine the advantages of state-of-the-art machine-learning denoising with the capabilities of structure propagation to yield improved image-based denoising of different types of basis image data.

Specifically, it is expected that the machine-learning algorithm will be able to better handle anti-correlated edges/structures in the basis image data. Because of their anti-correlation such structures are not sufficiently visible to be utilized by standard denoising techniques. However, use of a machine-learning method will, by design, be able to extract structure information from all input image data and analyze this information in an intelligent way to deliver improved edge-preserving denoising of the basis image data.

In other words, use of a machine-learning method using the proposed approach reduces the need and reliance upon other forms of denoising to produce denoised basis images.

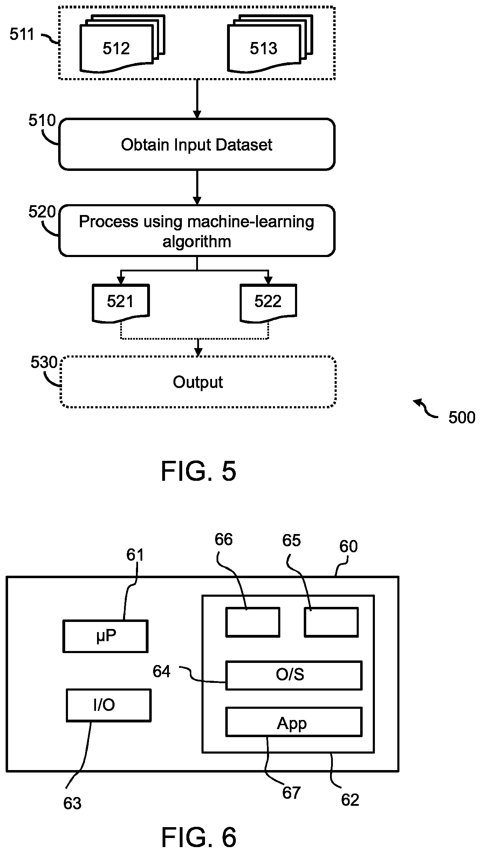

Figure 5 is a flowchart illustrating a computer-implemented method 500 according to an embodiment.

The computer implemented method 500 is configured for denoising basis images of a region of interest of a subject scanned by a CT scanner. The CT scanner comprises a detection system responsive to radiated energy.

The computer-implemented method comprises a step 510 of obtaining an input dataset 511. The input dataset comprises first basis image data 512 of the region of interest of the subject, comprising image domain data responsive to a first type of material in a region scanned by the CT scanner and/or spectra of energy incident on the detection system of the CT scanner. The input dataset 511 also comprises second basis image data 513 of the region of interest of the subject, comprising image domain data responsive to a second type of material in a region scanned by the CT scanner and/or spectra of energy incident on the detection system of the CT scanner.

The first and second basis image data are generated by the computed tomography scanner. The step 510 of obtaining the first and second basis image data may comprise obtaining the first and second basis image data from the CT scanner itself or from a memory or storage unit storing data generated by a CT scanner.

The method 500 further comprises a step 520 processing the input dataset using a machine-learning algorithm to generate a first denoised basis image 521, containing a denoised image responsive to the first type of material and/or spectra of energy, and a second denoised basis image 522, containing a denoised image responsive to the second type of material and/or spectra of energy.

Approaches for performing step 520 have been previously described and may be adapted for use in any embodiment of the method 500.

The method 500 may further comprise a step 530 of outputting the first and second denoised basis images. Step 530 may comprise, for instance, storing the first and second denoised basis images in a storage or memory unit, e.g. for later access. In some examples, step 530 comprises controlling a user-perceptible output, e.g. at a display, to provide a visual representation of the first and/or second denoised basis images. In some examples, step 530 comprises passing the denoised basis images to a further processing arrangement, e.g. for performing further processing of the denoised basis images, for instance, to produce other forms of material image.

By way of further example, Figure 6 illustrates an example of a device 60 (or processing arrangement) within which one or more parts of an embodiment may be employed. Various operations discussed above may utilize the capabilities of the device 60. For example, one or more parts of a system for processing an image with a CNN may be incorporated in any element, module, application, and/or component discussed herein. In this regard, it is to be understood that system functional blocks can run on a single computer or may be distributed over several computers and locations (e.g. connected via internet).

The device 60 includes, but is not limited to, PCs, workstations, laptops, PDAs, palm devices, servers, storages, cloud computing devices, distributed processing systems and the like. Generally, in terms of hardware architecture, the device 60 may include one or more processing circuitries 61, memory 62, and one or more I/O devices 63 that are communicatively coupled via a local interface (not shown). The local interface can be, for example but not limited to, one or more buses or other wired or wireless connections, as is known in the art. The local interface may have additional elements, such as controllers, buffers (caches), drivers, repeaters, and receivers, to enable communications. Further, the local interface may include address, control, and/or data connections to enable appropriate communications among the aforementioned components.

The processing circuitry 61 is a hardware device for executing software that can be stored in the memory 62. The processing circuitry 61 can be virtually any custom made or commercially available processing circuitry, a central processing unit (CPU), a digital signal processing circuitry (DSP), or an auxiliary processing circuitry among several processing arrangements associated with the device 60, and the processing circuitry 61 may be a semiconductor based microprocessing circuitry (in the form of a microchip) or a microprocessing circuitry.

The memory 62 can include any one or combination of volatile memory elements (e.g., random access memory (RAM), such as dynamic random access memory (DRAM), static random access memory (SRAM), etc.) and non-volatile memory elements (e.g., ROM, erasable programmable read only memory (EPROM), electronically erasable programmable read only memory (EEPROM), programmable read only memory (PROM), tape, compact disc read only memory (CD-ROM), disk, diskette, cartridge, cassette or the like, etc.). Moreover, the memory 62 may incorporate electronic, magnetic, optical, and/or other types of storage media. The memory 62 can have a distributed architecture, where various components are situated remote from one another, but can be accessed by the processing circuitry 61.

The software in the memory 62 may include one or more separate programs, each of which comprises an ordered listing of executable instructions for implementing logical functions. The software in the memory 62 includes a suitable operating system (O/S) 64, compiler 65, source code 66, and one or more applications 67 in accordance with exemplary embodiments. As illustrated, the application 67 comprises numerous functional components for implementing the features and operations of the exemplary embodiments. The application 67 of the device 60 may represent various applications, computational units, logic, functional units, processes, operations, virtual entities, and/or modules in accordance with exemplary embodiments, but the application 67 is not meant to be a limitation.

The operating system 64 controls the execution of other computer programs, and provides scheduling, input-output control, file and data management, memory management, and communication control and related services. It is contemplated by the inventors that the application 67 for implementing exemplary embodiments may be applicable on all commercially available operating systems.

Application 67 may be a source program, executable program (object code), script, or any other entity comprising a set of instructions to be performed. When a source program, then the program is usually translated via a compiler (such as the compiler 65), assembler, interpreter, or the like, which may or may not be included within the memory 62, so as to operate properly in connection with the O/S 64. Furthermore, the application 67 can be written as an object oriented programming language, which has classes of data and methods, or a procedure programming language, which has routines, subroutines, and/or functions, for example but not limited to, C, C++, C#, Pascal, BASIC, API calls, HTML, XHTML, XML, ASP scripts, JavaScript, FORTRAN, COBOL, Perl, Java, ADA, .NET, and the like.

The I/O devices 63 may include input devices such as, for example but not limited to, a mouse, keyboard, scanner, microphone, camera, etc. Furthermore, the I/O devices 63 may also include output devices, for example but not limited to a printer, display, etc. Finally, the I/O devices 63 may further include devices that communicate both inputs and outputs, for instance but not limited to, a NIC or modulator/demodulator (for accessing remote devices, other files, devices, systems, or a network), a radio frequency (RF) or other transceiver, a telephonic interface, a bridge, a router, etc. The I/O devices 63 also include components for communicating over various networks, such as the Internet or intranet.

If the device 60 is a PC, workstation, intelligent device or the like, the software in the memory 62 may further include a basic input output system (BIOS) (omitted for simplicity). The BIOS is a set of essential software routines that initialize and test hardware at startup, start the O/S 65, and support the transfer of data among the hardware devices. The BIOS is stored in some type of read-only-memory, such as ROM, PROM, EPROM, EEPROM or the like, so that the BIOS can be executed when the device 60 is activated.

When the device 60 is in operation, the processing circuitry 61 is configured to execute software stored within the memory 62, to communicate data to and from the memory 62, and to generally control operations of the device 60 pursuant to the software. The application 67 and the O/S 64 are read, in whole or in part, by the processing circuitry 61, perhaps buffered within the processing circuitry 61, and then executed.

When the application 67 is implemented in software, it should be noted that the application 67 can be stored on virtually any computer readable medium for use by or in connection with any computer related system or method. In the context of this document, a computer readable medium may be an electronic, magnetic, optical, or other physical device or means that can contain or store a computer program for use by or in connection with a computer related system or method.

The application 67 can be embodied in any computer-readable medium for use by or in connection with an instruction execution system, apparatus, or device, such as a computer-based system, processing circuitry-containing system, or other system that can fetch the instructions from the instruction execution system, apparatus, or device and execute the instructions. In the context of this document, a computer-readable medium can be any means that can store, communicate, propagate, or transport the program for use by or in connection with the instruction execution system, apparatus, or device. The computer readable medium can be, for example but not limited to, an electronic, magnetic, optical, electromagnetic, infrared, or semiconductor system, apparatus, device, or propagation medium.

In the context of the present disclosure, the I/O devices 63 may be configured to receive the input datasets from a medical imaging device. In another example, the input datasets are obtained from a memory arrangement or unit (not shown).

The I/O devices 63 may be configured to provide the output dataset(s) to a user interface. The user interface may be configured to provide a visual representation of the output dataset(s), e.g. display an image (or images) corresponding to the medical imaging data contained in the output dataset(s).

The skilled person would be readily capable of developing a device having processing circuitry for carrying out any herein described method. Thus, each step of the flow chart may represent a different action performed by the processing circuitry of a device, and may be performed by a respective module of the processing circuitry of the device.

Embodiments may therefore make use of a device. The device can be implemented in numerous ways, with software and/or hardware, to perform the various functions required. A processor is one example of a device which employs one or more microprocessors that may be programmed using software (e.g., microcode) to perform the required functions. A device may however be implemented with or without employing a processor, and also may be implemented as a combination of dedicated hardware to perform some functions and a processor (e.g., one or more programmed microprocessors and associated circuitry) to perform other functions.

Examples of device components that may be employed in various embodiments of the present disclosure include, but are not limited to, conventional microprocessors, application specific integrated circuits (ASICs), and field-programmable gate arrays (FPGAs).

In various implementations, a processor or device may be associated with one or more storage media such as volatile and non-volatile computer memory such as RAM, PROM, EPROM, and EEPROM. The storage media may be encoded with one or more programs that, when executed on processing circuitry, perform the required functions. Various storage media may be fixed within a processor or device or may be transportable, such that the one or more programs stored thereon can be loaded into a processor or device.

It will be understood that disclosed methods are preferably computer-implemented methods. As such, there is also proposed the concept of a computer program comprising code means for implementing any described method when said program is run on a device (containing processing circuitry), such as a computer. Thus, different portions, lines or blocks of code of a computer program according to an embodiment may be executed by a device or computer to perform any herein described method. In some alternative implementations, the functions noted in the block diagram(s) or flow chart(s) may occur out of the order noted in the Figures. For example, two blocks shown in succession may, in fact, be executed substantially concurrently, or the blocks may sometimes be executed in the reverse order, depending upon the functionality involved.

Variations to the disclosed embodiments can be understood and effected by those skilled in the art in practicing the claimed invention, from a study of the drawings, the disclosure and the appended claims. In the claims, the word comprising does not exclude other elements or steps, and the indefinite article a or an does not exclude a plurality. A single processor or other unit may fulfill the functions of several items recited in the claims. The mere fact that certain measures are recited in mutually different dependent claims does not indicate that a combination of these measures cannot be used to advantage. If a computer program is discussed above, it may be stored/distributed on a suitable medium, such as an optical storage medium or a solid-state medium supplied together with or as part of other hardware, but may also be distributed in other forms, such as via the Internet or other wired or wireless telecommunication systems. If the term adapted to is used in the claims or description, it is noted the term adapted to is intended to be equivalent to the term configured to. Any reference signs in the claims should not be construed as limiting the scope.

## Claims

1. A computer-implemented method, comprising:
obtaining an input dataset comprising:
first basis image data of a region of interest of the subject, comprising image domain data responsive to a first type of material in the region of interest and/or spectra of energy passing through or generated in the region of interest; and
second basis image data of the region of interest of the subject, comprising image domain data responsive to a second type of material in the region of interest and/or spectra of energy passing through or generated in the region of interest, wherein the first and second basis image data are generated by a computed tomography scanner; and
processing the input dataset using a machine-learning algorithm to generate a first denoised basis image responsive to the first type of material and/or spectra of energy, and a second denoised basis image responsive to the second type of material and/or spectra of energy.

2. The computer-implemented method of claim 1, wherein the input dataset further comprises combined image data of the region of interest of the subject, wherein the combined image data is generated, by the computed tomography scanner, using projection data obtained from all detection elements of the computed tomography scanner.

3. The computer-implemented method of any of claims 1 or 2, wherein the machine-learning algorithm is an artificial neural network formed of a plurality of layers.

4. The computer-implemented method of claim 3, wherein processing the input dataset using the machine-learning algorithm comprises setting values of the first layer of the artificial neural network to include all values of the first basis image data and all values of the second basis image data.

5. The computer-implemented method of any of claims 1 to 4, wherein the first basis image data comprises a single first basis image, and the second basis image data comprises a single second basis image.

6. The computer-implemented method of any of claims 1 to 4, wherein the first basis image data comprises a plurality of first basis images, each first basis image being two-dimensional, and the second basis image data comprises a plurality of second basis images, each second basis image being two-dimensional.

7. The computer-implemented method of claim 6, wherein the plurality of first basis images comprises fewer than 10 first basis images, and the plurality of second basis images comprises fewer than 10 second basis images

8. The computer-implemented method of any of claims 1 to 7, wherein the first basis image data only comprises at least one photoelectric image, and the second basis image data only comprises at least one Compton-scatter image.

9. The computer-implemented method according to any of claims 1 to 8, wherein the machine-learning algorithm is a residual machine-learning algorithm that produces noise imaging data.

10. The computer-implemented method of any of claims 1 to 9, wherein the first basis image data and the second basis image data are both generated by a computed tomography scanner operating in a low dosage mode.

11. The computer-implemented method of any of claims 1 to 10, wherein:
the input dataset comprises one or more sets of additional basis image data of the region of interest of the subject, each set of additional basis image data comprising image domain data responsive to a respective different type of material in the region of interest and/or spectra of energy passing through or generated in the region of interest; and
processing the input dataset using a machine-learning algorithm further generates, for each set of additional basis image data, a respective additional denoised basis image, being a denoised image responsive to the respective type of material and/or spectra of energy of the corresponding set of additional basis image data.

12. A computer program product comprising computer program code means which, when executed on a computing device having a processing system, cause the processing system to perform all of the steps of the method according to any of claims 1 to 11.

13. A device configured to denoise medical imaging data, the device comprising:
processing circuitry; and
a memory containing instructions that, when executed by the processing circuitry, configure the processing circuitry to:
obtain an input dataset comprising:
first basis image data of a region of interest of the subject, comprising image domain data responsive to a first type of material in the region of interest and/or spectra of energy passing through or generated in the region of interest; and
second basis image data of the region of interest of the subject, comprising image domain data responsive to a second type of material in the region of interest and/or spectra of energy passing through or generated in the region of interest, wherein the first and second basis image data are generated by a computed tomography scanner; and
process the input dataset using a machine-learning algorithm to generate a first denoised basis image responsive to the first type of material and/or spectra of energy, and a second denoised basis image responsive to the second type of material and/or spectra of energy.

14. The device of claim 13, wherein the input dataset further comprises combined image data of the region of interest of the subject, wherein the combined image data is generated, by the computed tomography scanner, using projection data obtained from all detection elements of the computed tomography scanner.

15. The device of claim 13 or 14, wherein the machine-learning algorithm is an artificial neural network formed of a plurality of layers.
